# EUROPÄISCHE PATENTSCHRIFT

(11) **EP 3 036 201 B1**
(45) Veröffentlichungstag und Bekanntmachung des Hinweises auf die Patenterteilung: **03.05.2017**
(21) Anmeldenummer: 14755595.7
(22) Anmeldetag: 19.08.2014
(51) Int. Cl.: C02F 1/34

(54) **VERFAHREN UND VORRICHTUNG ZUR BEHANDLUNG VON WASSER DURCH KAVITATION ZWISCHEN RINGSTRUKTUREN**
METHOD AND DEVICE FOR TREATING WATER BY MEANS OF CAVITATION BETWEEN RING SRTUCTURES
PROCÉDÉ ET DISPOSITIF DE TRAITEMENT D'EAU AU MOYEN DE CAVITATION ENTRE DES STRUCTURES ANNULAIRES

(30) Priorität: 22.08.2013 DE 102013013813
(43) Veröffentlichungstag der Anmeldung: 29.06.2016
(73) Patentinhaber: Sieva D.O.O. - Poslovna Enota Idrija, 5280 Idrija (SI)
(72) Erfinder: SIROK, Branko, 1360 Vrhnika (SI); DULAR, Matevz, 1000 Ljubljana (SI); PETKOVSEK, Martin, 1000 Ljubljana (SI)
(74) Vertreter: Grättinger Möhring von Poschinger Patentanwälte Partnerschaft
(86) Internationale Anmeldenummer: PCT/EP2014/002273
(87) Internationale Veröffentlichungsnummer: WO 2015/024654

(56) Entgegenhaltungen:
- US-A1- 2012 291 765
- PETKOVSEK MARTIN ET AL: "Rotation generator of hydrodynamic cavitation for water treatment", SEPARATION AND PURIFICATION TECHNOLOGY, Bd. 118, 31. Juli 2013 (2013-07-31), Seiten 415-423, XP028739024, ISSN: 1383-5866, DOI: 10.1016/J.SEPPUR.2013.07.029 in der Anmeldung erwähnt
- DATABASE EPODOC [Online] EUROPEAN PATENT OFFICE, THE HAGUE, NL; 25. September 2007 (2007-09-25), "HYDRODYNAMICS CAVITATING REACTOR", XP002732288, Database accession no. UA-2007005623-U -& UA 26 547 U 25. September 2007 (2007-09-25)

## Beschreibung

Die vorliegende Erfindung betrifft eine zur Verwendung bei einem Verfahren der Behandlung von Wasser durch Kavitation bestimmte und geeignete Kavitiervorrichtung.

Aspekte des Umweltschutzes gewinnen global zunehmend an Bedeutung. Ein wichtiger Aspekt davon ist die Reinigung von Abwässern aus Haushalten, Industrie und Gewerbe.

Solche Abwässer können mit diversen Schadstoffen belastet sein. Dementsprechend gibt es eine Reihe verschiedener Behandlungsmethoden, welche sich grundsätzlich einteilen lassen in mechanische, physikalische, biologische und chemische Methoden. Es gibt bereits Vorschläge, im Rahmen der Behandlung von Wasser, insbesondere von Abwasser, zur Zerstörung schädlicher organischer Substanzen Kavitation einzusetzen. Der Gedanke dabei ist, dass die bei Kavitation auftretenden, mit extremen Druckspitzen verbundenen starken Druckpulsationen organische Substanzen bzw. Verbindungen zerstören bzw. so aufbrechen, dass sie mit weiteren Behandlungsmethoden weitergehend abgebaut werden können. Entsprechende Vorschläge, zur Reinigung von Wasser Kavitiervorrichtungen einzusetzen, sind beispielsweise beschrieben in der WO 2007/076579 A1, der EP 1780177 A2 und der US 6224826 B1.

Weiterhin befasst sich der Aufsatz von Martin Petkovsek et al. "Rotation Generator of Hydrodynamic Cavitation for Water Treatment" (Separation and Purification Technology, 2013) mit dem Einsatz von Kavitation beim Entfernen von Pharmazeutika-Rückständen aus Wasser. Es wird eine gattungsgemäße Kavitiervorrichtung nach dem Oberbegriff des Anspruchs 1 vorgeschlagen bzw. untersucht: Diese weist zwei in einem Gehäuse angeordnete, sich gegenläufig koaxial drehende Rotoren auf, welche mit einander - unter Ausbildung eines Spalts - gegenüberstehenden Vorsprüngen ausgestattet sind. Seitwärts münden in das Gehäuse ein Wassereintritt und (gegenüberliegend) ein Wasseraustritt. In der Veröffentlichung werden die Einflüsse von Zusätzen (Wasserstoffperoxyd) und von Betriebsparametern (Temperatur) dargestellt. Bei einer der untersuchten Ausführungsformen sind die Stirnflächen der Vorsprünge eines der beiden Rotoren in Umfangsrichtung in dem Sinne abgeschrägt, dass sich entgegen der Drehrichtung des betreffenden Rotors die Spaltweite gegenüber den Vorsprüngen des zweiten Rotors vergrößert.

Die EP 2228134 A2 offenbart eine der Behandlung von Flüssigkeit dienende Vorrichtung, bei der im Rahmen der Abscheidung, Reinigung und Homogenisierung (z.B. mit der Zielsetzung der Verbesserung der Verbrennung eines flüssigen Brennstoffs) auch Kavitationseffekte genutzt werden. Die Vorrichtung umfasst ein durchströmtes, einen Flüssigkeitseintritt und einen Flüssigkeitsaustritt aufweisendes Gehäuse, in dem eine rotierend angetriebene Scheibe (Rotor) mit axial orientierten Vorsprüngen angeordnet ist. Die Vorsprünge des Rotors sind auf einem oder mehreren Kreisen angeordnet. Sie stehen entweder der Stirnwand des Gehäuses oder einer in dieser aufgenommenen, gegenläufig rotierenden zweiten Scheibe gegenüber, wobei an der Stirnwand des Gehäuses bzw. der zweiten Scheibe auf koaxialen Kreisen axial orientierte Vorsprünge angeordnet sein können. Die Vorsprünge des Rotors und die an der Stirnwand des Gehäuses bzw. der zweiten Scheibe vorgesehenen Vorsprünge überlappen dabei einander in axialer Richtung und sind hierzu in dem Sinne "auf Lücke" angeordnet, dass jeweils die auf einem Kreis angeordneten Vorsprünge des Rotors in einen ringförmigen Zwischenraum eindringen, der zwischen zwei benachbarten Kreisen von Vorsprüngen der Stirnwand des Gehäuses bzw. der zweiten Scheibe besteht. Entsprechendes gilt für die an der Stirnwand des Gehäuses bzw. der zweiten Scheibe angeordneten Vorsprünge. Die sich drehende zweite Scheibe kann dabei auf einem sich drehenden Rohr angeordnet sein, welches den Flüssigkeitseintritt bildet.

Im großtechnischen Maßstab ist die Kavitation von Wasser zu dessen Behandlung bisher nicht eingesetzt worden. Ersichtlich liegt bisher kein Verfahren vor, das unter Aspekten der Zuverlässigkeit, des Wirkungsgrades bzw. der Effizienz und sonstiger praxisrelevanter Aspekte großtechnisch brauchbar ist.

Die vorliegende Erfindung ist darauf gerichtet, eine zur Behandlung von Wasser durch Kavitation geeignete Kavitiervorrichtung bereitzustellen, welche sich zum großtechnischen Einsatz eignet, insbesondere indem unter Verwendung der Kavitiervorrichtung eine effiziente Behandlung von Wasser mittels Kavitation großtechnisch möglich ist.

Gelöst wird die vorstehend angegebene Aufgabenstellung gemäß der vorliegenden Erfindung durch die in Anspruch 1 angegebene Kavitiervorrichtung. Diese umfasst ein Gehäuse mit einem Wassereintritt, einem Wasseraustritt und einem sich zwischen diesen erstreckenden Hohlraum sowie zwei in dem Hohlraum angeordnete, einander gegenüberstehende Ringstrukturen, von denen eine erste Teil eines nicht-drehenden Stators und die andere, zweite Teil eines drehend angetriebenen Rotors ist. Beide Ringstrukturen weisen axial gegeneinander gerichtete Zähne auf und definieren zwischen sich eine ringförmige Kavitierzone, welche von innen nach außen durchströmbar ist, indem der Wassereintritt strömungstechnisch mit einem radial innerhalb der Kavitierzone angeordneten Bereich des Hohlraums und der Wasseraustritt mit einem radial außerhalb der Kavitierzone angeordneten Bereich des Hohlraums kommuniziert. Stirnseitig sind an den Zähnen einer der beiden Ringstrukturen, bevorzugt der nicht-drehenden ersten Ringstruktur, Kavitierflächen vorgesehen, die in Umfangsrichtung dergestalt geneigt sind, dass sie in relativer Drehrichtung der anderen, bevorzugt der drehenden zweiten Ringstruktur betrachtet ihren Abstand zu letzterer vergrößern. Die stirnseitig an der (relativ zur ersten Ringstruktur drehend bewegten) zweiten Ringstruktur vorgesehene Verzahnung bewegt das in der Kavitierzone vorhandene Wasser aktiv mit vorgegebener Geschwindigkeit über die Kavitierflächen der ersten Ringstruktur. Bei typischen Größenordnungen ist hierfür beispielsweise Drehzahl der rotierenden Ringstruktur von zwischen 1000 und 3000¹/min geeignet.

Die Kavitierflächen sind radial außen von äußeren Leitstegen eingefasst, die in Umfangsrichtung einen konstanten Abstand zur zweiten Ringstruktur einhalten. Der besagte Abstand der äußeren Leitstege zur zweiten Ringstruktur ist dabei bevorzugt minimal bemessen, z.B. nur wenige Millimeter stark oder ggf. sogar noch geringer. Die Leitstege tragen zu einer gerichteten Strömung des Wassers an den Kavitierflächen entlang bei; sie reduzieren die Gefahr eines "Kurzschlusses" zwischen dem radial inneren und dem radial äußeren Bereich des Hohlraums in im Wesentlichen radialer Richtung. Sie bilden darüber hinaus eine Art Barriere bzw. "Abdichtung" der Kavitierflächen gegenüber dem radial außerhalb der Kavitierzone angeordneten (z.B. mit dem Wasseraustritt kommunizierenden) Bereich des Hohlraums, so dass die dort herrschenden Druckverhältnisse und die Druckverhältnisse im Bereich der Kavitierflächen in gewissem Umfang voneinander entkoppelt sind. Aus den gleichen Erwägungen heraus sind die Kavitierflächen auch radial innen von inneren Leitstegen eingefasst, die in Umfangsrichtung einen im Wesentlichen konstanten Abstand zur zweiten Ringstruktur einhalten. Solche inneren Leitstege entkoppeln in gewissem Umfang die Druckverhältnisse im radial innerhalb der Ringzone angeordneten (z.B. mit dem Wassereintritt kommunizierenden) Bereich des Hohlraums einerseits und im Bereich der Kavitierflächen andererseits. Besonders vorteilhaft ist es, wenn die äußeren und die inneren Leitstege Teil von die Kavitierflächen einfassenden, U-förmigen Taschen sind.

Indem erfindungsgemäß der Wassereintritt der erfindungsgemäßen Kavitiervorrichtung mit einem radial innerhalb der Kavitierzone angeordneten Bereich des Hohlraums und der Wasseraustritt mit einem radial außerhalb der Kavitierzone angeordneten Bereich des Hohlraums kommunizieren, so dass die Kavitierzone (mit einer Bewegungskomponente in Umfangsrichtung) von innen nach außen durchströmt wird kommuniziert, unterstützen die innerhalb der Kavitierzone auftretenden strömungstechnischen Effekte die Förderung des zu behandelnden Wassers durch die Kavitiervorrichtung. Ungeachtet dessen und unabhängig davon kann die Kavitiervorrichtung, gemäß einer bevorzugten Weiterbildung, über eine Pumpstufe verfügen, welche das Wasser durch die Kavitierzone fördert. Bevorzugt ist die Pumpstufe zuströmseitig angeordnet, d.h. zwischen dem Wassereintritt und der Kavitierzone. Unter bestimmten Voraussetzungen kann sich allerdings auch eine abströmseitige, zwischen der Kavitierzone und dem Wasseraustritt angeordnete Pumpstufe als vorteilhaft erweisen, deren Saugwirkung ggf. die Kavitationseffekte in der Kavitierzone unterstützen bzw. verstärken kann.

Mit der erfindungsgemäßen Kavitiervorrichtung lassen sich vergleichsweise große Durchsätze an Wasser effektiv und effizient einer Behandlung durch Kavitation unterziehen, wobei die entsprechende Kavitiervorrichtung vergleichsweise kompakt ausgeführt sein kann. Dazu trägt bei, dass die ringförmige Kavitierzone von innen nach außen durchströmt wird, wobei eine der beiden die Kavitierzone definierenden Ringstrukturen drehend, die andere Ringstruktur indessen nicht-drehend ausgeführt ist. Denn die hierdurch innerhalb der Kavitierzone auftretenden strömungstechnischen Effekte unterstützen die Förderung des zu behandelnden Wassers durch die Kavitiervorrichtung. In Anwendung der solchermaßen ausgeführten Kavitiervorrichtung ist eine großtechnische Umsetzung des erfindungsgemäßen Verfahrens (s.o.) mit vergleichsweise geringem apparativem Aufwand möglich. Nicht grundsätzlich ausschlaggebend ist dabei, ob die erste, die Kavitierflächen aufweisende Ringstruktur dreht, d.h. Teil eines Rotors ist, oder aber - als Teil eines Stators - nicht dreht; beide Ausführungsformen kommen in Betracht und haben anwendungstechnisch ihre spezifischen Vorteile.

Als besonderer Aspekt der Effizienz ist weiterhin hervorzuheben, dass die Kavitiervorrichtung nicht nur mit einer vergleichsweise geringen Leistungsaufnahme auskommt, sondern dass sie darüber hinaus auch eine hohe Lebensdauer aufweist; denn die Arbeits- und (hieran angepasste) Bauweise der Kavitiervorrichtung reduziert das Risiko einer Beschädigung von Rotor und Stator durch eben die Kavitation. Als ein insoweit entscheidender Aspekt ist anzusehen, dass gemäß der vorliegenden Erfindung zur Erzeugung von Kavitation - durch die Erzeugung von örtlichem Unterdruck mit hohen Druckgradienten - gezielt auf Kavitierflächen abgestellt wird, welche an den Stirnseiten von an einer ersten der Ringstrukturen vorgesehenen, in Richtung auf die andere Ringstruktur gerichteten Zähnen angeordnet und in Umfangsrichtung geneigt sind und über die das Wasser unter Einwirkung der anderen, relativ zur ersten Ringstruktur drehenden zweiten Ringstruktur bewegt wird, wobei die Kavitierflächen in der relativen Umfangs-Bewegungsrichtung der zweiten Ringstruktur bezogen auf die erste Ringstruktur ihren Abstand zu der zweiten Ringstruktur vergrößern. In dem Wasser, das unter Einwirkung der zweiten Ringstruktur, welche ebenfalls über einer stirnseitige, der Verzahnung der ersten Ringstruktur gegenüberstehende Verzahnung verfügt, mit hoher Geschwindigkeit über die Kavitierflächen der ersten Ringstruktur bewegt wird, entsteht auf diese Weise (mit einem steilen Druckgradienten) lokaler Unterdruck, der zu Kavitation führt.

Die Steigung der Kavitierflächen in Umfangsrichtung beträgt dabei für typische Anwendungsfälle bevorzugt zwischen 2° und 10°. Bei einer solchen Gestaltung stellen sich die angestrebten Wirkungen (Kavitation) in einem solchen Maß ein, dass eine effiziente Behandlung des Wassers möglich ist, ohne dass zugleich eine unzulässig große Gefahr der Beschädigung der Kavitiervorrichtung durch die entstehenden Druckpulsationen entsteht. Dies ist, wie dargelegt, eine vorteilhafte Bemessung für typische Anwendungsfälle. Je nach Art der Substanz, welche mittels Kavitationseffekten zerstört bzw. abgebaut werden soll, sind unter Umständen andere Neigungen bzw. Steigungen der Kavitierflächen vorteilhaft. Im Übrigen können auch die einzelnen, an der Verzahnung einer Ringstruktur angeordneten Kavitierflächen unterschiedlich geneigt (bzw. angestellt) sein. Hierdurch kann die Bandbreite der Behandlung des Wassers hinsichtlich unterschiedlicher Schadstoffe vergrößert und zudem die Gefahr schädlicher, die Lebensdauer beeinträchtigender Resonanzen verringert werden. Ebenfalls zur Vermeidung bzw. Verringerung von Resonanzeffekten ist günstig, wenn die einzelnen Zähne der ersten und/oder der zweiten Ringstruktur in Umfangsrichtung unterschiedlich dimensioniert sind und/oder wenn die beiden Ringstrukturen eine unterschiedliche Anzahl an Zähnen aufweisen.

Eine bevorzugte Weiterbildung der erfindungsgemäßen Kavitiervorrichtung zeichnet sich dadurch aus, dass der axiale Abstand der beiden - die ringförmige Kavitierzone definierenden - Ringstrukturen zueinander einstellbar ist. Hierdurch ist die Kavitiervorrichtung mit einfachen Mitteln an unterschiedliche Aufgaben und Anforderungen anpassbar; denn bei ansonsten gleichen Randbedingungen hängt der Gradient der örtlichen Druckpulsationen innerhalb der Kavitierzone von dem Abstand ab, den die Ringstrukturen zueinander einhalten.

Bevorzugt sind zumindest zwischen den Zähnen der zweiten Ringstruktur Strömungskanäle angeordnet, die sich über die radiale Erstreckung der Kavitierzone erstrecken. Über die besagten Strömungskanäle, die besonders bevorzugt zu den an die Kavitierzone angrenzenden Bereichen des Hohlraums hin ohne nennenswerte Verringerung des Querschnitts offen sind, kommuniziert der innerhalb der Kavitierzone angeordnete Bereich des Hohlraumes mit dem außerhalb der Kavitierzone angeordneten Bereich des Hohlraumes. Solche Strömungskanäle erweisen sich unter anderem im Hinblick auf die Zuverlässigkeit der erfindungsgemäßen Kavitiervorrichtung als besonders vorteilhaft; denn durch sie können Fremdkörper von jenem dem Wassereintritt zugeordneten Bereich des Hohlraums zu jenem dem Wasseraustritt zugeordneten Bereich des Hohlraums gelangen. Somit führen Fremdkörper mit Abmessungen, die größer sind als die minimale Spaltweite bzw. der minimale Abstand zwischen den beiden Ringstrukturen im Bereich der ringförmigen Kavitierzone nicht zu einer Beschädigung der Kavitiervorrichtung. Hiervon profitiert aufgrund der gesteigerten Betriebssicherheit die Effizienz. Auch zwischen den (die Kavitierflächen aufweisenden) Zähnen der ersten Ringstruktur können mehr oder weniger ausgeprägte Strömungskanäle vorgesehen sein.

Gemäß einer wiederum anderen bevorzugten Weiterbildung der vorliegenden Erfindung vergrößern die Kavitierflächen in radialer Richtung entsprechend der Durchströmungsrichtung der Kavitierzone ihren Abstand zur zweiten Ringstruktur. In diesem Sinne vergrößern bei der erfindungsgemäß von innen nach außen durchströmten Kavitierzone (s.o.) die Kavitierflächen bevorzugt ihren Abstand zur zweiten Ringstruktur (auch) in Richtung radial nach außen. Dies ist unter Aspekten der Effizienz vorteilhaft. Für die entsprechende Neigung bzw. Steigung der Kavitierflächen in radialer Richtung sind - für typische Anwendungsfälle - ebenfalls Winkel zwischen 2° und 10° günstig.

Gemäß einer abermals anderen bevorzugten Weiterbildung der Erfindung ist die (drehende) Rotor-Ringstruktur als Rotor-Ringscheibe ausgeführt ist, die auf einer durch einen Motor drehend angetriebenen, in dem Hohlraum angeordneten Trägerstruktur montiert ist. In entsprechender Weise umfasst bevorzugt der Stator eine Stator-Ringscheibe, die an einem Gehäuseabschnitt montiert ist. Dies begünstigt eine individuelle Anpassung der Kavitiervorrichtung an unterschiedliche Aufgaben und Anforderungen durch einfachen Austausch der Rotor-Ringscheibe und/oder der Stator-Ringscheibe. Die oben erwähnte Trägerstruktur kann dabei insbesondere als durchströmter zentraler Wasserleitkörper ausgeführt sein, der einen radialen Austrittsspalt aufweist, welcher im Wesentlichen mit dem zwischen den Ringstrukturen bestehenden Spalt fluchtet. Bei geeigneter Ausgestaltung kann in den zentralen Wasserleitkörper zugleich eine Pumpstufe (s.o.) implementiert sein, welche für eine effiziente Zuführung des zu behandelnden Wassers in die hierfür maßgebliche Kavitierzone zwischen den beiden Ringstrukturen sorgt.

Die erfindungsgemäße Kavitiervorrichtung kann ggs. mehrstufig ausgeführt sein, indem zwei oder mehr Stufen kaskadenartig nacheinander durchströmt werden. In diesem Falle ist der Wasseraustritt der vorangehenden Stufe mit dem Wassereintritt der nachfolgenden Stufe strömungstechnisch verbunden.

Weiterhin kann, gemäß einer abermals anderen bevorzugten Weiterbildung der Erfindung, die Kavitiervorrichtung eine Drosseleinrichtung aufweisen, mittels welcher sich die Durchströmung der Kavitiervorrichtung verändern bzw. gezielt einstellen lässt. Auf diese Weise kann die Verweildauer des Wassers in der Kavitierzone eingestellt und auf diese Weise insbesondere an den Grad der Verschmutzung bzw. Schadstoffbelastung angepasst werden.

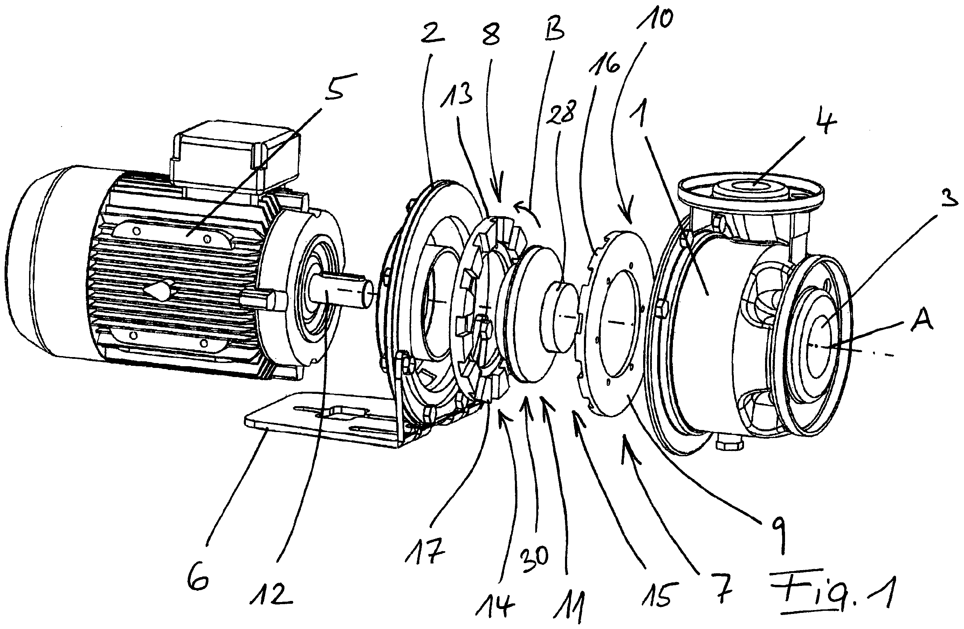

Im Folgenden wird die vorliegende Erfindung anhand eines in der Zeichnung veranschaulichten bevorzugten Ausführungsbeispiels näher erläutert. Dabei zeigt
- Fig. 1: in Explosionsdarstellung eine die vorliegende Erfindung konstruktiv umsetzende Kavitiervorrichtung,

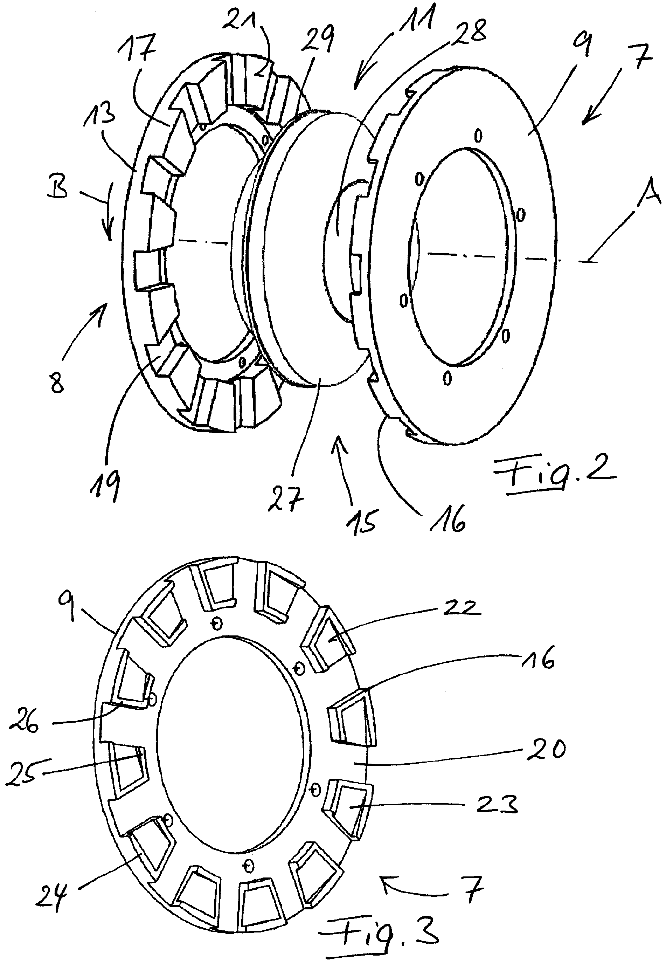

- Fig. 2: die die Kavitierzone der Kavitiervorrichtung nach Fig. 1 definierende erste und zweite Ringstruktur samt der Rotor-Trägerstruktur und
- Fig. 3: die erste Ringstruktur der Kavitiervorrichtung nach Fig. 1 von der Verzahnungsseite her.

Die in der Zeichnung dargestellte Kavitiervorrichtung umfasst ein Gehäuse, welches einen Hohlraum umschließt und dergestalt zweiteilig ausgeführt ist, dass es eine Gehäuseschale 1 und einen mit dieser dicht verschließbaren Gehäusedeckel 2 aufweist. An der Gehäuseschale 1 sind ein Wassereintritt 3 und ein Wasseraustritt 4 vorgesehen, die beide mit dem Hohlraum kommunizieren. An den Gehäusedeckel 2 ist ein Elektromotor 5 angeflanscht. Weiterhin ist mit dem Gehäusedeckel 2 eine Montagehalterung 6 verbunden.

In dem Hohlraum sind einander gegenüberstehend eine erste Ringstruktur 7 und eine zweite Ringstruktur 8 angeordnet. Die erste Ringstruktur 7 ist - axial verstellbar - innen an der Gehäuseschale 1 fixiert; sie bildet eine als Stator-Ringscheibe 9 ausgeführte Stator-Ringstruktur 10. Demgegenüber ist die zweite Ringstruktur 8 mit einer Rotor-Trägerstruktur 11 verbunden, die ihrerseits mit der - in den Hohlraum hineinragenden, um die Achse A drehenden - Motorwelle 12 verbunden ist; sie stellt demnach eine relativ zur ersten Ringstruktur 7 drehende (Pfeil B), als Rotor-Ringscheibe 13 ausgeführte Rotor-Ringstruktur 14 dar.

Die erste und die zweite Ringstruktur 7 bzw. 8, welche zusammen eine - strömungstechnisch zwischen dem Wassereintritt 3 und dem Wasseraustritt 4 angeordnete - von innen nach außen durchströmte ringförmige Kavitierzone 15 definieren, weisen im Wesentlichen axial gegeneinander gerichtete Zähne 16 bzw. 17 auf. Zwischen den Zähnen 17 der zweiten Ringstruktur 8 sind Strömungskanäle 19 angeordnet, die sich über die radiale Erstreckung der Kavitierzone 15 erstrecken und radial außen offen in jenen Bereich des Hohlraumes münden, der unmittelbar mit dem Wasseraustritt 4 kommuniziert. Auch die erste Ringstruktur 7 weist zwischen jeweils einander benachbarten Zähnen 16 angeordnete Strömungskanäle 20 auf.

Die Stirnflächen 21 der Zähne 17 der zweiten, drehenden Ringstruktur 8 liegen in einer auf der Achse A senkrecht stehenden Ebene. Die Stirnflächen 22 der Zähne 16 der ersten, nicht-drehenden Ringstruktur 7 umfassen demgegenüber in Umfangsrichtung sowie in radialer Richtung geneigte Kavitierflächen 23. Die Kavitierflächen 23 sind dabei so geneigt (angestellt), dass sich jeweils sowohl in Umfangsrichtung in Drehrichtung B der zweiten Ringstruktur 8 als auch in radialer Richtung von innen nach außen ihr Abstand zu der zweiten Ringstruktur 8 vergrößert; der Anstellwinkel (die Steigung) in Umfangsrichtung beträgt dabei etwa 6°. Die Kavitierflächen 23 sind radial außen von äußeren Leitstegen 24 und radial innen von inneren Leitstegen 25 eingefasst, die jeweils in Umfangsrichtung einen im Wesentlichen konstanten Abstand zur zweiten Ringstruktur 8 einhalten und jeweils Teil von die Kavitierflächen 23 auf drei Seiten einfassenden, U-förmigen Taschen 26 sind.

Die radial innerhalb der Kavitierzone 15 in dem Hohlraum angeordnete Rotor-Trägerstruktur 11 ist als durchströmter zentraler Wasserleitkörper 27 ausgeführt. Dieser weist einen Eintrittstutzen 28, der mit dem Wassereintritt 3 des Gehäuses fluchtet, sowie einen radialen Austrittsspalt 29, welcher im Wesentlichen mit dem zwischen den beiden Ringstrukturen 7 und 8 bestehenden Spalt fluchtet, auf. Der rotierende Wasserleitkörper 27 fungiert - im Sinne einer Radialpumpe - als Pumpstufe 30, welche das Wasser aktiv von innen nach außen durch die Kavitierzone 15 fördert.

## Patentansprüche

1. Kavitiervorrichtung zur Verwendung bei einem Verfahren der Behandlung von Wasser durch Kavitation, umfassend ein Gehäuse mit einem Wassereintritt (3), einem Wasseraustritt (4) und einem sich zwischen diesen erstreckenden Hohlraum sowie zwei in dem Hohlraum angeordnete, einander gegenüberstehende Ringstrukturen (7, 8), welche axial gegeneinander gerichtete Zähne (16, 17) aufweisen und eine ringförmige Kavitierzone (15) definieren, wobei stirnseitig an den Zähnen (16) einer der beiden Ringstrukturen (7, 8) Kavitierflächen (23) vorgesehen sind, die in Umfangsrichtung dergestalt geneigt sind, dass sie in relativer Drehrichtung (B) der anderen Ringstruktur (8, 7) betrachtet ihren Abstand zu letzterer vergrößern,
**dadurch gekennzeichnet,**
**dass** eine erste Ringstruktur (7) Teil eines nicht-drehenden Stators und die zweite Ringstruktur (8) Teil eines drehend angetriebenen Rotors ist, wobei die Kavitierzone (15) von innen nach außen durchströmbar ist, indem der Wassereintritt (3) strömungstechnisch mit einem radial innerhalb der Kavitierzone (15) angeordneten Bereich des Hohlraums und der Wasseraustritt (4) mit einem radial außerhalb der Kavitierzone angeordneten Bereich des Hohlraums kommuniziert, und wobei ferner die Kavitierflächen (23) radial außen von äußeren Leitstegen (24) und radial innen von inneren Leitstegen (25) eingefasst sind, die in Umfangsrichtung einen konstanten Abstand zur anderen Ringstruktur (8) einhalten.

2. Kavitiervorrichtung nach Anspruch 1,
**dadurch gekennzeichnet,**
**dass** die Kavitierflächen (23) an den Zähnen (16) der nicht-drehenden ersten Ringstruktur (7) vorgesehen sind.

3. Kavitiervorrichtung nach Anspruch 1 oder Anspruch 2, **dadurch gekennzeichnet, dass** in dem Hohlraum eine Pumpstufe (30) angeordnet ist, welche das Wasser durch die Kavitierzone (15) fördert.

4. Kavitiervorrichtung nach einem der Ansprüche 1 bis 3, **dadurch gekennzeichnet, dass** der axiale Abstand der beiden Ringstrukturen (7, 8) zueinander einstellbar ist.

5. Kavitiervorrichtung nach einem der Ansprüche 1 bis 4, **dadurch gekennzeichnet, dass** zumindest zwischen den Zähnen (17) einer der beiden Ringstrukturen (7, 8), bevorzugt zumindest der drehenden zweiten Ringstruktur (8), Strömungskanäle (19, 20) angeordnet sind, die sich über die radiale Erstreckung der Kavitierzone (15) erstrecken.

6. Kavitiervorrichtung nach Anspruch 5, **dadurch gekennzeichnet, dass** die Strömungskanäle (19) zu den an die Kavitierzone (15) angrenzenden Bereichen des Hohlraums hin ohne Verringerung des Querschnitts offen sind.

7. Kavitiervorrichtung nach einem der Ansprüche 1 bis 6, **dadurch gekennzeichnet, dass** die Kavitierflächen (23) in radialer Richtung entsprechend der Durchströmungsrichtung der Kavitierzone (15) ihren Abstand zur anderen Ringstruktur vergrößern.

8. Kavitiervorrichtung nach einem der Ansprüche 1 bis 7, **dadurch gekennzeichnet, dass** die äußeren und inneren Leitstege (24, 25) Teil von die Kavitierflächen auf drei Seiten einfassenden, U-förmigen Taschen (26) sind.

9. Kavitiervorrichtung nach einem der Ansprüche 1 bis 8, **dadurch gekennzeichnet, dass** die Rotor-Ringstruktur (14) als Rotor-Ringscheibe (13) ausgeführt ist, die auf einer durch einen Motor (5) drehend angetriebenen, in dem Hohlraum angeordneten Rotor-Trägerstruktur (11) montiert ist.

10. Kavitiervorrichtung nach Anspruch 9, **dadurch gekennzeichnet, dass** die Rotor-Trägerstruktur (11) als durchströmter zentraler Wasserleitkörper (27) ausgeführt ist, der einen radialen Austrittsspalt (29) aufweist, welcher im Wesentlichen mit dem zwischen den beiden Ringstrukturen (7, 8) bestehenden Spalt fluchtet.

11. Kavitiervorrichtung nach einem der Ansprüche 1 bis 10, **dadurch gekennzeichnet, dass** die Steigung der Kavitierflächen (23) in Umfangsrichtung zwischen 2° und 10° beträgt.

12. Kavitiervorrichtung nach einem der Ansprüche 1 bis 11, **dadurch gekennzeichnet, dass** die beiden Ringstrukturen (7, 8) eine unterschiedliche Anzahl an Zähnen (16, 17) aufweisen.

13. Kavitiervorrichtung nach einem der Ansprüche 1 bis 12, **dadurch gekennzeichnet, dass** Zähne (16, 17) zumindest einer der beiden Ringstrukturen (7, 8) untereinander unterschiedlich ausgeführt sind.

## Claims

1. A cavitation device for use in a process for treating water by cavitation, comprising a housing with a water inlet (3), a water outlet (4) and a hollow chamber extending there between, as well as two ring structures (7, 8) arranged in the hollow chamber and facing one another, which ring structures have teeth (16, 17) that are directed axially against one another and which define a ring-shaped cavitation zone (15), wherein cavitation surfaces (23) are provided on the end-faces of the teeth (16) of one of the two ring structures (7, 8), which are inclined in circumferential direction in such a way that when viewed in the relative direction of rotation (B) of the other ring structure (8, 7), their distance from the latter increases,
**characterised in that**
a first ring structure (7) is part of a non-rotating stator, and the second ring structure (8) is part of a rotationally driven rotor, wherein the cavitation zone (15) can be flowed-through from inside to outside, **in that** the water inlet (3), in terms of flow, communicates with an area of the hollow chamber arranged radially inside the cavitation zone (15) and the water outlet (4) communicates with an area of the hollow chamber arranged radially outside the cavitation zone, and wherein further the cavitation surfaces (23) are surrounded radially externally by outer guide webs (24) and radially internally by inner guide webs (25), which in circumferential direction maintain a constant distance from the other ring structure (8).

2. The cavitation device according to claim 1, **characterised in that** the cavitation surfaces (23) are provided on the teeth (16) of the non-rotating first ring structure (7).

3. The cavitation device according to claim 1 or claim 2, **characterised in that** a pumping stage (30) is arranged in the hollow chamber, which conveys the water through the cavitation zone (15).

4. The cavitation device according to one of claims 1 to 3, **characterised in that** the axial distance of the two ring structures (7, 8) from one another is adjustable.

5. The cavitation device according to one of claims 1 to 4, **characterised in that** flow channels (19, 20) are arranged at least between the teeth (17) of one of the ring structures (7, 8), preferably at least the rotating ring structure (8), which extend over the radial extension of the cavitation zone (15).

6. The cavitation device according to claim 5, **characterised in that** the flow channels (19) are open towards the areas of the hollow chamber, which border the cavitation zone (15) without a reduction in cross-section.

7. The cavitation device according to one of claims 1 to 6, **characterised in that** the cavitation surfaces (23), in a radial direction corresponding to the direction of flow of the cavitation zone (15), increase their distance from the other ring structure.

8. The cavitation device according to one of claims 1 to 7, **characterised in that** the outer and inner guiding webs (24, 25) form part of the U-shaped pockets (26) surrounding the cavitation surfaces on three sides.

9. The cavitation device according to one of claims 1 to 8, **characterised in that** the rotor ring structure (14) is realised as a rotor ring disc (13), which is mounted on a rotor carrier structure (11) arranged in the hollow chamber and rotationally driven by a motor (5).

10. The cavitation device according to claim 9, **characterised in that** the rotor carrier structure (11) is realised as a flowed-through central water-conducting body (27) which has a radial outlet gap (29), which is substantially aligned with the gap which exists between the two ring structures (7, 8).

11. The cavitation device according to one of claims 1 to 10, **characterised in that** the gradient of the cavitation surfaces (23) in circumferential direction is between 2 and 10 degrees.

12. The cavitation device according to one of claims 1 to 11, **characterised in that** the two ring structures (7, 8) have differing numbers of teeth (16, 17).

13. The cavitation device according to one of claims 1 to 12, **characterised in that** the teeth (16, 17) on at least one of the two ring structures (7, 8) are realised differently from one another.

## Revendications

1. Dispositif de cavitation destiné à être utilisé dans le cadre d'un procédé de traitement d'eau par cavitation, comprenant un boîtier avec une arrivée d'eau (3), une évacuation d'eau (4) et un espace creux s'étendant entre celles-ci, ainsi que deux structures annulaires (7, 8) opposées l'une à l'autre et disposées dans l'espace creux, lesquelles présentent des dents (16, 17) orientées axialement les unes contre les autres et définissent une zone de cavitation annulaire (15), des surfaces de cavitation (23) étant prévues côté frontal sur les dents (16) de l'une des deux structures annulaires (7, 8), lesquelles sont inclinées en direction du pourtour de manière à accroître leur écart par rapport à l'autre structure annulaire (8, 7), vues dans la direction de rotation relative (B) de celle-ci,
**caractérisé en ce que**
une première structure annulaire (7) fait partie d'un stator non-rotatif et la deuxième structure annulaire (8) fait partie d'un rotor entraîné de façon rotative, la zone de cavitation annulaire (15) pouvant être traversée de l'intérieur vers l'extérieur, dans la mesure où l'arrivée d'eau (3) communique fluidiquement avec une zone de l'espace creux disposée radialement à l'intérieur de la zone de cavitation annulaire (15) et l'évacuation d'eau (4) communique fluidiquement avec une zone de l'espace creux disposée radialement à l'extérieur de la zone de cavitation annulaire, et les surfaces de cavitation (23) étant en outre entourées radialement à l'extérieur par des nervures de guidage extérieures (24) et radialement à l'intérieur par des nervures de guidage intérieures (25), lesquelles maintiennent un écart constant par rapport à l'autre structure annulaire (8) dans la direction du pourtour.

2. Dispositif de cavitation selon la revendication 1,
**caractérisé en ce que**
les surfaces de cavitation (23) sont prévues sur les dents (16) de la première structure annulaire non-rotative (7).

3. Dispositif de cavitation selon la revendication 1 ou la revendication 2, **caractérisé en ce qu'**un étage de pompage (30) est disposé dans l'espace creux, lequel transporte l'eau à travers la zone de cavitation annulaire (15).

4. Dispositif de cavitation selon l'une des revendications 1 à 3, **caractérisé en ce que** l'écart axial entre les deux structures annulaires (7, 8) est réglable.

5. Dispositif de cavitation selon l'une des revendications 1 à 4, **caractérisé en ce que** des canaux d'écoulement (19, 20) s'étendant sur l'étendue radiale de la zone de cavitation annulaire (15) sont disposés au moins entre les dents (17) de l'une des deux structures annulaires (7, 8), de préférence au moins de la deuxième structure annulaire rotative (8).

6. Dispositif de cavitation selon la revendication 5, **caractérisé en ce que** les canaux d'écoulement (19) sont ouverts vers les régions de l'espace creux adjacentes à la zone de cavitation annulaire (15), sans diminution de la section transversale.

7. Dispositif de cavitation selon l'une des revendications 1 à 5, **caractérisé en ce que** les surfaces de cavitation (23) accroissent leur écart par rapport à l'autre structure annulaire dans la direction radiale conformément à la direction d'écoulement de la zone de cavitation annulaire (15).

8. Dispositif de cavitation selon l'une des revendications 1 à 7, **caractérisé en ce que** les nervures de guidage extérieures et intérieures (24, 25) font partie de poches en forme de U (26) entourant les surfaces de cavitation sur trois côtés.

9. Dispositif de cavitation selon l'une des revendications 1 à 8, **caractérisé en ce que** la structure annulaire du rotor (14) est conçue comme un disque annulaire de rotor (13), laquelle est montée sur une structure de support de rotor (11) disposée dans l'espace creux et entraînée de façon rotative par un moteur (5).

10. Dispositif de cavitation selon la revendication 9, **caractérisé en ce que** la structure de support de rotor (11) est conçue comme un corps de guidage d'eau central (27) traversé par un flux, lequel présente une fente d'évacuation radiale (29) quasiment en affleurement avec la fente prévue entre les deux structures annulaires (7, 8).

11. Dispositif de cavitation selon l'une des revendications 1 à 10, **caractérisé en ce que** la pente des surfaces de cavitation (23) mesure entre 2° et 10° dans la direction du pourtour.

12. Dispositif de cavitation selon l'une des revendications 1 à 11, **caractérisé en ce que** les deux structures annulaires (7, 8) présentent un nombre de dents (16, 17) différent.

13. Dispositif de cavitation selon l'une des revendications 1 à 12, **caractérisé en ce que** des dents (16, 17) de l'une au moins des deux structures annulaires (7, 8) sont conçues différemment les unes par rapport aux autres.
